# NEUE EUROPÄISCHE PATENTSCHRIFT

(11) **EP 2 376 293 B2**
(45) Veröffentlichungstag und Bekanntmachung des Hinweises auf die Entscheidung über den Einspruch: **14.11.2018**
(45) Hinweis auf die Patenterteilung: 03.09.2014
(21) Anmeldenummer: 09801162.0
(22) Anmeldetag: 16.12.2009
(51) Int. Cl.: B60C 23/04

(54) **VENTILANORDNUNG**
VALVE ARRANGEMENT
DISPOSITIF DE SOUPAPE

(30) Priorität: 17.12.2008 DE 202008016621 U; 02.06.2009 DE 202009007703 U
(43) Veröffentlichungstag der Anmeldung: 19.10.2011
(73) Patentinhaber: Alligator Ventilfabrik GmbH, 89537 Giengen (DE)
(72) Erfinder: PALAORO, Renato, 89518 Heidenheim (DE); KLAIBER, Ulf, 89522 Heidenheim (DE); KINDELMANN, Sven, 89428 Syrgenstein (DE); OPPOLD, Timo, 89568 Hermaringen (DE); HÄUßLER, Gerd, 89537 Giengen (DE)
(74) Vertreter: Patentanwälte Behrmann Wagner PartG mbB
(86) Internationale Anmeldenummer: PCT/EP2009/009014
(87) Internationale Veröffentlichungsnummer: WO 2010/075967

(56) Entgegenhaltungen:
- EP-A1- 1 354 727
- EP-A2- 0 751 017
- WO-A1-03/002360
- WO-A1-2008/064869
- WO-A1-2008/064869
- WO-A1-2008/103975
- DE-A1-102005 027 002
- DE-A1-102006 043 873
- DE-B4- 10 047 853
- US-A1- 2005 087 007
- US-A1- 2007 295 076
- US-A1- 2008 127 724
- US-B2- 8 803 680
- "Konstruieren mit Kunststoffen", ISBN 978 3 446 22589 3
- "Schnappverbindung" aus Wikipedia

## Beschreibung

Die vorliegende Erfindung betrifft eine Ventilvorrichtung nach dem Oberbegriff des Hauptanspruchs. Eine derartige Vorrichtung ist beispielsweise aus der EP 0 751 017 B1 der Anmelderin bekannt und beschäftigt sich mit der Thematik, den Ventilkörper eines Ventils mit einem Gehäuse zu verbinden, welches typischerweise auf einer Radinnenseite vorgesehen und mit elektronischen Reifendruckmessmitteln zur Reifendruckerfassung und Übertragung eines entsprechenden Signals versehen ist.

Die in der EP 0 751 017 B1 beschriebene Vorrichtung sieht zu diesem Zweck vor, dass das Gehäuse aus der Richtung der Radinnenseite mittels einer Fixierschraube gegen den Ventilkörper verspannt ist. Allerdings weist eine derartige Montage den Nachteil auf, dass - zeitaufwendig - die Fixierschraube durch einen Gehäuseabschnitt des Gehäuses geführt werden und in ein Innengewinde des Ventilkörpers eingreifen muss. Auch wirkt sich diese Fixierschraube, durch ihr Eigengewicht, nachteilig auf das Dynamikverhalten der Gesamtanordnung auf.

Aus der WO 2008/064869 A1 ist eine Ventilvorrichtung nach dem Oberbegriff des Hauptanspruches bekannt. Zum weitern Stand der Technik wird verwiesen auf die WO 03/00260 A1, die DE 10 2006 043873 A1 sowie die DE 10 2005 027002 A1.

Entsprechend ist es Aufgabe der vorliegenden Erfindung, eine bekannte Ventilvorrichtung im Hinblick auf eine lösbare Befestigung zwischen dem Ventilkörper und dem Gehäuse zu verbessern, insbesondere das Verriegeln zwischen diesen Teilen zu flexibilisieren und zu vereinfachen, dabei den konstruktiven Aufwand und die Bedienung bei der Montage zu verbessern.

Die Aufgabe wird durch die Ventilvorrichtung mit den Merkmalen des Hauptanspruchs gelöst; vorteilhafte Weiterbildungen der Erfindung sind in den Unteransprüchen beschrieben.

In erfindungsgemäß vorteilhafter Weise bewirkt zunächst das erfindungsgemäße Vorsehen der Sicherungsmittel, welche lateral und zum Herstellen des verriegelten Zustands an oder in einen mantelseitigen Verriegelungsabschnitt des Ventilkörpers an- bzw. eingreifen, dass in konstruktiv sehr einfacher Weise, gleichzeitig durch einfache manuelle Betätigung lösbar, eine feste Verriegelung zwischen dem Ventilkörper und dem Gehäuse realisiert werden kann: Indem nämlich die Sicherungsmittel, typischerweise weitergebildet als geeignetes Formelement (etwa Blech-, Biege-, Stanzteil oder Drahtstück) seitlich und lediglich beschränkt auf einzelne seitliche Abschnitte und nicht entlang des gesamten Umfangs (so ist "lateral" im Sinne der Erfindung zu verstehen) in den mantelseitigen Verriegelungsabschnitt eingreifen (wobei der Verriegelungsabschnitt selbst wiederum bevorzugt als abschnittsweise oder vollständig umlaufender Schlitz od.dgl. geeignet ausgestattet sein kann), ist in sehr wirksamer Weise das Verriegeln durch Festlegen einer axialen Relativposition zwischen Ventilkörper und Gehäuse gewährleistet. Darüber hinaus kann durch einfaches Bewegen, Verbiegen oder andere durch etwa manuellen Zugriff erforderliche Maßnahmen das Formelement aus seiner Eingriffsposition (verriegelter Zustand) gebracht werden und so das freie Bewegen und Lösen des Gehäuses relativ zum Ventilkörper gestatten. Umgekehrt wiederum kann bei geeigneter Ausgestaltung der Sicherungsmittel etwa ein Verrasten oder Verschnappen (etwa durch geeignete elastische oder federnde Ausbildung eines entsprechenden, in den Verriegelungsabschnitt eingreifenden Bereichs) erfolgen.

Entsprechend ist gemäß der Erfindung vorgesehen, dass zunächst die Sicherungsmittel als am oder im Gehäuse schwenkbar, drehbar, federnd und/oder plastisch deformierbar gelagerte Baugruppen ausgebildet sind: Das bereits erwähnte Formelement kann so geeignet an den Sicherungszweck angepasst werden, ist zudem einfach und mit geringem Aufwand herstell- und montierbar.

In einem solchen Fall eines vom Gehäusematerial separat vorgesehenen Sicherungsmittels ist zudem die weitere Wirkung der Erfindung besonders vorteilhaft sichtbar, nämlich dass geeignet im verriegelten Zustand die Sicherungsmittel am oder im Gehäuse gesichert oder verriegelt sind, was weiter bevorzugt durch den verriegelten Ventilkörper selbst geschieht. Mit anderen Worten, gemäß dieser Realisierungsform der Erfindung ist die Aufnahme bzw. Lagerung der Sicherungsmittel (etwa Formelement) dergestalt vorgesehen, dass der eingesetzte und verriegelte Ventilkörper selbst ein Herausfallen bzw. unbeabsichtigtes Entfernen der Sicherungsmittel verhindert.

Weiter vorteilhaft gemäß der Erfindung sind die Sicherungsmittel hebel- oder bügelartig ausgestaltet und weisen einen Arm oder Schenkel auf, der zum An- bzw. Eingreifen in bzw. an den Verriegelungsabschnitt ausgebildet ist.

Gemäß einer weiteren bevorzugten Realisierungsform der Erfindung sind diese Sicherungsmittel als Metall-Stanzteil (weiter bevorzugt einstückig) realisiert. Günstig ist es hier, wenn eine Federwirkung durch eine querschnittlich U- oder V-Form der Sicherungsmittel realisiert wird, wobei zwei Schenkel einen Federabschnitt begrenzen und ein Schenkel sich am Gehäuse abstützt (weiter bevorzugt dort geeignet befestigt ist, etwa durch eine Nut oder Hinterschneidung), während der andere Schenkel dann, ggf. durch einen daran ansitzenden Abschnitt, mit dem Ventil verriegelnd zusammenwirkt.

Vorgesehen ist es zudem, gemäß der Erfindung einen Abschnitt der Sicherungsmittel zum gehäuseexternen Zugreifen vorzusehen, etwa zum unmittelbaren manuellen Zugriff oder zum Zugreifen mittels eines geeigneten Werkzeugs. Eine derartige Maßnahme ermöglicht es dann auf einfache Weise, dass die Sicherungsmittel in den unverriegelten Zustand gebracht werden können (also z.B. durch Deformation eines plastisch deformierbaren Formkörpers), so dass daraufhin dann das Gehäuse vom Ventilkörper gelöst werden kann.

Gemäß einer bevorzugten Realisierungsform und zur Ermöglichung eines besonders großserientauglichen, preisgünstigen Aggregats ist es zudem vorgesehen, den Ventilkörper einstückig auszubilden. Etwa im Gegensatz zum als gattungsbildend zitierten Stand der Technik ist es nicht notwendig, ein Innengewinde od.dgl. Befestigungsmittel vorzusehen, so dass insoweit größere konstruktive Flexibilität hinsichtlich des Ventilkörpers besteht, so dass dieser gemäß der bevorzugten Weiterbildung der Erfindung auch einstückig vorliegen kann.

Weiter bevorzugt im Rahmen der Erfindung liegt es zudem, den Ventilkörper mit Mitteln zur Verdrehsicherung auszugestalten, dergestalt, dass eine Radialposition des Ventilkörpers relativ zum Gehäuse bestimmt ist. In der konkreten Realisierung kann dies beispielsweise dadurch geschehen, dass der Ventilkörper, etwa im gehäuseseitigen Endbereich, eine oder mehrere plane Flächen ausbildet, welche zum kraftschlüssigen Zusammenwirken mit einem zugehörigen Aufnahmeabschnitt des Gehäuses und zum Herstellen der Verdrehsicherung zusammenwirken.

Besonders bevorzugt ist es zudem im Rahmen der Erfindung, die Ventilvorrichtung als sogenanntes Snap-In-Ventil auszugestalten. Zu diesem Zweck erhält in ansonsten bekannter Weise der (typischerweise und weiterbildungsgemäß einstückig gebildete) Ventilkörper im außenseitigen Mantelbereich eine Gummierung (aufsitzenden Gummikörper), welcher in eine zugehörige Felgenbohrung unter Deformation des Gummikörpers einschnappen kann und so eine besonders einfache Montage gestattet.

Eine weitere bevorzugte Weiterbildung der Erfindung ermöglicht ferner, dass ein aus metallischem Material realisiertes Sicherungsmittel zusätzlich und synergetisch als Antenne, Strahler od.dgl. elektrisch (bzw. hochfrequenzleitend) an eine im Gehäuse vorgesehene Sender- bzw. Empfangselektronik angebunden werden kann (und ggf. dann leitend den metallischen Ventilkörper kontaktiert): Auf diese Weise ist es dann nämlich günstig möglich, die Hochfrequenz- bzw. Funkeigenschaften bekannter im Gehäuse vorgesehener Einrichtungen zu verbessern, unter Nutzung der (ohnehin vorhandenen) und geeignet als Blech- oder Drahtelement vorgesehener Sicherungsmittel.

Besonders bevorzugt ist es hier, zur weiteren Vereinfachung der Fertigung die Sicherungsmittel (typischerweise realisiert als geeignet gebogenes Stanzteil) mit einem Anschluss- bzw. Kontaktabschnitt in Form eines (weiter bevorzugt einstückig ansitzenden) Kontaktflansches oder anderem Fortsatz zu versehen, welcher so bemessen ist, dass dieser unmittelbar in eine Leiterplatte einer Sende- bzw. Empfangselektronik eingesetzt und dort zusammen mit anderen Elektronikbauelementen verlötet werden kann.

Im Ergebnis ermöglicht die vorliegende Erfindung in überraschend einfacher und eleganter Weise die Flexibilisierung und Vereinfachung bekannter Verriegelungs- bzw. Befestigungstechnologien zwischen einem Ventilkörper und einem (typischerweise zur Aufnahme eines Drucksensors sowie einer Hochfrequenzbaugruppe ausgebildeten) Gehäuse, wobei sich die Erfindung in besonders bevorzugter Weise zur Realisierung eines Snap-In-Ventils eignet, die Anwendung jedoch grundsätzlich hierauf nicht beschränkt ist.

Weitere Vorteile, Merkmale und Einzelheiten der Erfindung ergeben sich aus der nachfolgenden Beschreibung bevorzugter Ausführungsbeispiele sowie anhand der Figuren; die Figuren zeigen in
- Fig. 1: eine Schemaansicht einer montierten Baugruppe einer Ventilvorrichtung in der Draufsicht;
- Fig. 2: einen Längsschnitt in axialer Richtung durch die Anordnung der Fig. 1;
- Fig. 3: eine Detailansicht des Ventilkörpers (einstückig) mit umgebendem Gummikörper zur Realisierung des Snap-In-Ventils;
- Fig. 4, Fig. 5: Querschnittsansichten durch die Anordnung der Fig. 1, Fig. 2 im Bereich des angreifenden Sicherungselementes (Sicherungsmittel) zur Verdeutlichung des verriegelten Zustands (Fig. 4) bzw. des unverriegelten, geöffneten Zustands (Fig. 5);
- Fig. 6:: eine Schemaansicht analog der Darstellung der Fig. 1 einer Ventilvorrichtung gemäß einer zweiten bevorzugten Ausführungsform samt Ausschnittsvergrößerung in Fig. 6a;
- Fig. 7:: eine Darstellung analog Fig. 2 der zweiten Ausführungsform (Fig. 6) als Längsschnitt in axialer Richtung, wobei die Ausschnittsdarstellung in Fig. 7a aus Fig. 7 Details der Verriegelung verdeutlicht;
- Fig. 8:: eine Detailansicht des modifizierten Ventilkörper analog zur Darstellung der Fig. 3 für das Ausführungsbeispiel der Fig. 6, 7;
- Fig. 9:: eine Detailansicht analog zur Darstellung der Fig. 4 zum Verdeutlichen des Einschnappens bzw. der Verriegelung des Ventilkörpers durch das Sicherungselement im Ausführungsbeispiel der Fig. 6 bis 8;
- Fig. 10 bis Fig. 13:: verschiedene Ansichten des einstückig als gebogenes Stanzteil realisierten Sicherungselements zur Realisierung der Sicherungsmittel des zweiten Ausführungsbeispiels und
- Fig. 14:: eine Perspektivansicht zum Verdeutlichen des Zusammenwirkens der Bestandteile der Ventilvorrichtung des zweiten Ausführungsbeispiels.

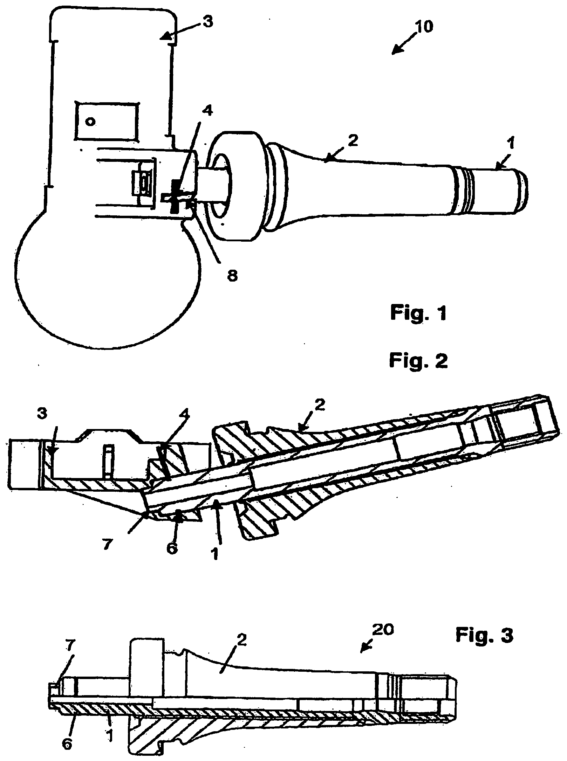

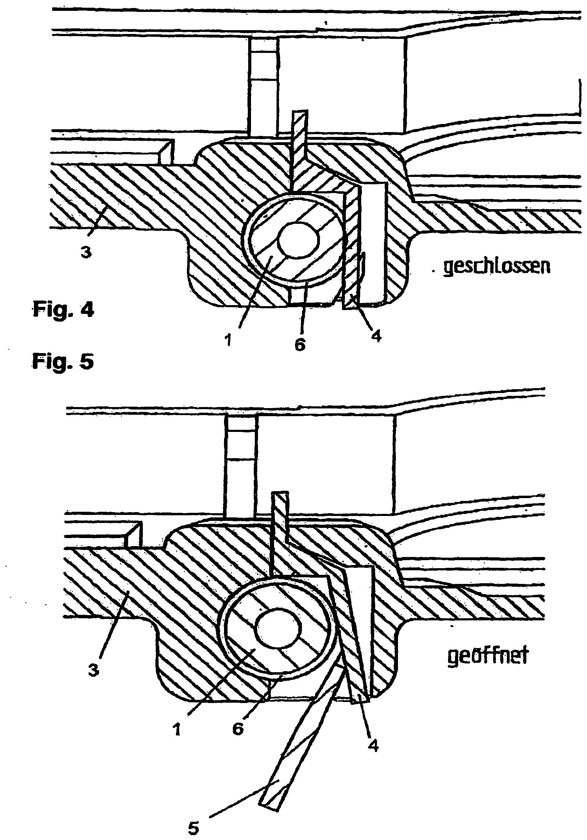

Die Realisierungsformen der Fig. 1 bis 5 verdeutlichen, dass zum Sichern des Ventilkörpers am Gehäuse (bzw. zum Sichern des Gehäuses am Ventilkörper) weder eine Schraubverbindung notwendig ist, noch ein gesondertes Sicherungselement, ein Sicherungsring od.dgl. aufgesteckt werden muss. Vielmehr wird, wie die Figuren 4 und 5 als Querschnitt verdeutlichen, lediglich ein deformier- oder schwenkbar im Gehäuse aufgenommenes Formelement 4 als Stanzteil durch externes Angreifen durch eine untere Gehäuseöffnung 8 zwischen einer lateralen Eingriffsposition (Fig. 4, der langgestreckte, abwärts gerichtete Arm des Sicherungselementes greift in eine umlaufende Ringnut 6 des Ventilkörpers 1 ein) und einem unverriegelten Zustand (Fig. 5, gezeigt ist das durch die Öffnung greifende Werkzeug 5 zum Endriegeln) bewegt wird. Genauer gesagt ist das Sicherungsmittel 4 als bügelförmiges Element im oberen Bereich fest aufgenommen und federnd ausgestaltet, so dass durch Wirkung des Werkzeugs 5 der langgestreckte Arm aus seinem Eingriffsbereich (Fig. 5) verbracht werden kann und so der Ventilkörper bzw. das Gehäuse zur Entnahme in axialer Richtung (d.h. aus der Bildebene der Fig. 4, Fig. 5 heraus) bewegt werden kann. Gleichzeitig wird verdeutlicht, dass durch Wirkung des eingeschobenen Ventilkörpers das Sicherungselement 4 vor dem Herausfallen gesichert ist, mit anderen Worten, es in seiner Position verbleibt und in der gezeigten Weise betätigt werden kann.

Gemäß einer bevorzugten Ausgestaltung ist der Ventilkörper so geformt, dass er beim Einstecken das Sicherungselement bzw. den Arm auswärts biegt (z.B. gegen eine elastische oder Federwirkung). Eine mantelseitig am Ventilkörper vorgesehene Ringnut ist dann passend zum Zusammenwirken mit dem Formelement bemessen und kann eine Schnappverbindung herstellen.

In den Figuren zusätzlich gezeigt ist eine Verdrehsicherung, welche durch endseitige Ausbildung einer oder mehrerer planer Flächen 7 des Ventilkörpers und eine zugehörige Aufnahme im Gehäuse realisiert wird. Im Detail nicht gezeigt ist ferner eine elektrische Ankopplung des Sicherungselementes 4 an eine im Gehäuseinneren des Elektronikgehäuses 3 (z.B. Fig. 2) vorgesehene Sensor- und Sendeelektronik zur Übertragung eines erfassten Reifen-Innendruckmesswertes. Auf diese Weise ist dann nicht nur eine zusätzliche Antennen- bzw. Resonatorfunktion in Form des Sicherungselementes 4 vorhanden, dieses kann gar bei entsprechender elektrischer Ankopplung an den Ventilkörper dafür sorgen, dass der metallische Ventilkörper selbst als Antennen- bzw. Strahlerelement wirkt und so auch eine sehr einfache Funkübertragung nach außen (extern einer Felge) erfolgen kann.

In ansonsten bekannter Weise wird das Snap-In-Ventil unter Nutzung der elastischen Wirkung des Gummikörpers in eine Felge eingesetzt. Wie in den Figuren 4 bzw. 5 gezeigt, wird durch Zugriff mittels eines Werkzeugs 5 im Bedarfsfall eine Verschnappung zwischen dem Sicherungselement 4 und dem Ventilkörper gelöst, um insoweit das Elektronikgehäuse vom Ventilkörper in axialer Richtung entfernen zu können.

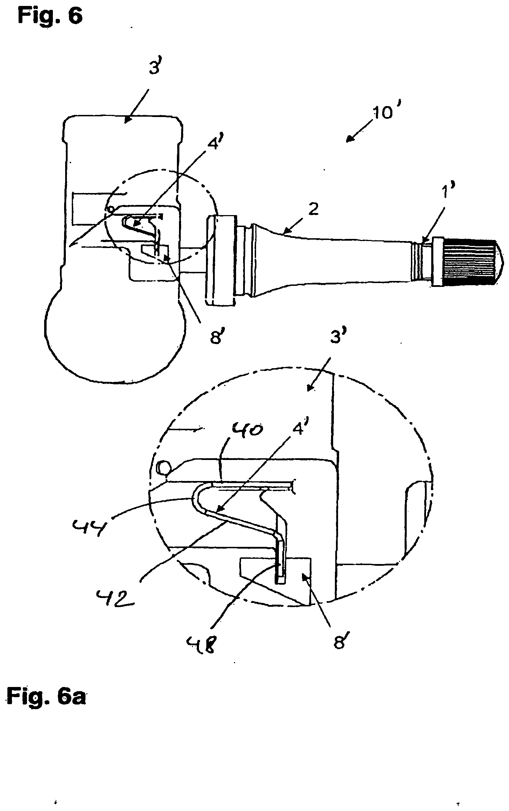

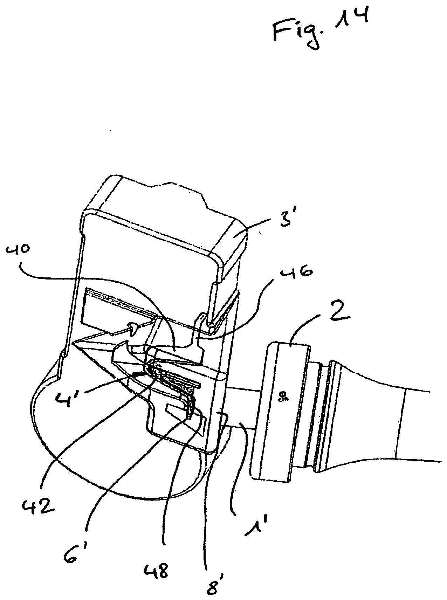

Unter Bezug auf die Fig. 6 bis 14 wird nachfolgende eine zweite Ausführungsform der vorliegenden Erfindung beschrieben; diese Realisierungsform der Ventilvorrichtung entspricht im Hinblick auf das beanspruchte Lösungsprinzip sowie die konstruktive Realisierung weitgehend der anhand der Fig. 1 bis 5 beschriebenen ersten Ausführungsform, wobei die nachfolgende Beschreibung der zweiten Ausführungsform sich auf die Unterschiede zur ersten Ausführungsform konzentriert und identische Bezugszeichen für identische Baugruppen verwendet werden. Wo funktional äquivalente, jedoch im Detail bzw. in der konstruktiven Realisierung leicht unterschiedliche Bauelemente bzw. Baugruppen Anwendung finden, ist dies durch apostrophierte Bezugszeichen verdeutlicht.

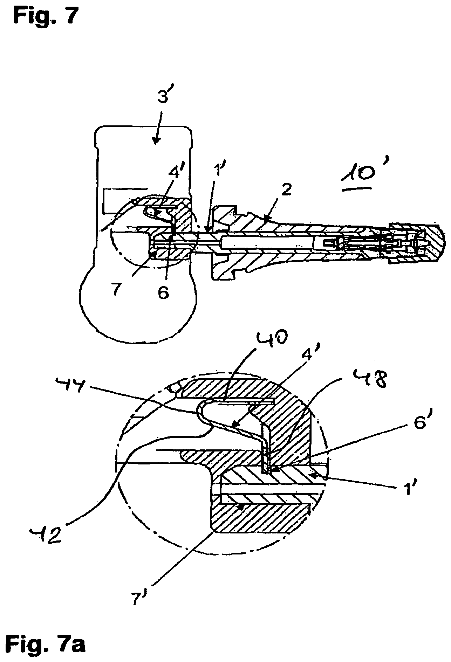

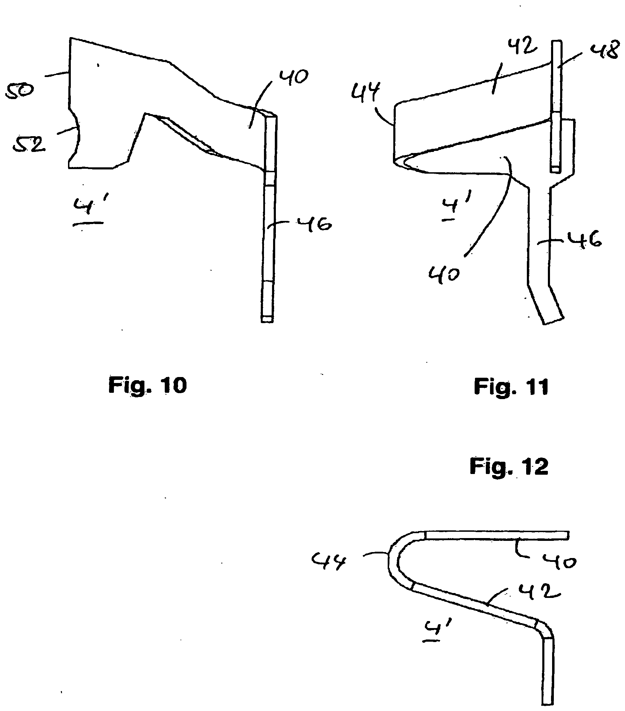

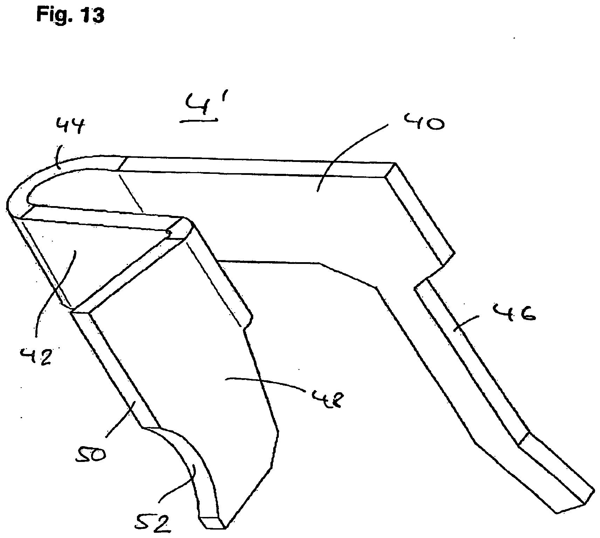

Analog zur Diskussion des ersten Ausführungsbeispiels anhand der Fig. 1, 2 verdeutlichen die Fig. 6, 6a, 7, 7a eine zweite Realisierungsform der Erfindung in der schematischen Draufsicht bzw. in Form eines Längsschnitts: Hier besteht (vgl. die Detailansichten der Fig. 10 bis 13) das Sicherungselement zur Realisierung der erfindungsgemäßen Sicherungsmittel als einstückig aus einem Metallblech realisiertes federndes Bügelelement 4', welches ein Paar von Schenkeln 40, 42 (Fig. 10 bis Fig. 13) aufweist, die im Querschnitt V-förmig (Fig. 12) über einen federnden Abschnitt 44 verbunden sind. An den Schenkel 40 schließt sich einstückig ein langgestreckter Kontaktabschnitt 46 an, welcher (vgl. Fig. 13) zum Zusammenwirken mit einer nicht näher im Detail gezeigten Elektronikplatine für die Sende- bzw. Empfangsfunktionalität ausgebildet ist, dergestalt, dass ein Ende des Abschnitts 46 in ansonsten bekannter Weise mit dieser Leiterplatte verlötet wird und so das Sicherungselement 4' als Antenne für diese Hochfrequenzeinheit wirken kann. Wie zudem die Fig. 6a bzw. 7a (als Detailvergrößerungen der gestrichelt gezeigten Abschnitte der Fig. 6 bzw. Fig. 7) verdeutlichen, ist der Schenkel 40 in einer Nut 6' des Gehäuses 3' aufgenommen und wird von diesem gehalten.

Vom Schenkel 42 erstreckt sich ein Eingriffsabschnitt 48 des gebogenen Sicherungselementblechs 4', welcher eine Eingriffskante 50 (vgl. Fig. 10) zum Eingreifen in eine Nut (Vertiefung) 6' des Ventilkörpers 1' anbietet; zur besseren Verriegelung weist diese Kante ein leicht einwärts bogenförmig gestaltetes Profil 52 auf.

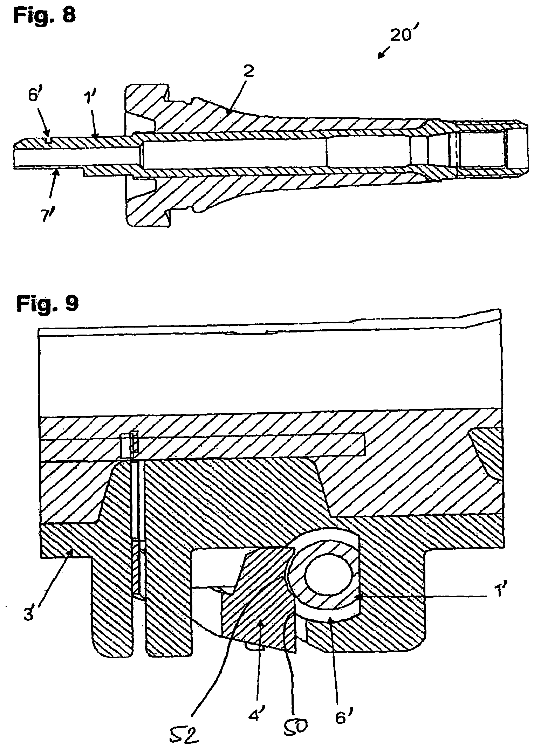

Die Fig. 6, 6, 7, 7a sowie 14 verdeutlichen den verschnappten Zustand. Analog zum vorbeschriebenen ersten Ausführungsbeispiel rastet der metallische Ventilkörper 1' (beim Einschieben mit seinem konischen vorderen Endabschnitt) in die Nut 6' (vgl. auch den Querschnitt der Fig. 8) ein. Zusätzlich sorgt eine Abflachung 7' am Ventilkörper 1 für eine Verdrehsicherung im Zusammenwirken mit einer entsprechend ausgestalteten Aufnahme im Gehäuse (z.B. Fig. 7a).

Analog zur vorbeschriebenen Weise erfolgt das Lösen durch Eingreifen in die Gehäusevertiefung bzw. -öffnung 8', etwa mittels eines Schraubenziehers od.dgl., wodurch die Eingriffskante 50 am Abschnitt 48 außer Eingriff mit der Nut 6' tritt und so das Ventil entfernt werden kann.

Besonders bevorzugt bei der zweiten Ausführungsform ist die durch die Bügelform aus Schenkeln 40, 42 sowie dem federnden Abschnitt 44 gebildete Federung in Richtung auf den Ventilkörper, welche hohe Verriegelungssicherheit mit leichter Montierbarkeit und Betriebssicherheit kombiniert.

Die vorliegende Erfindung ist nicht auf die gezeigten Ausführungsbeispiele beschränkt, insbesondere ist es umfasst und von der Erfindung vorgesehen, das Formelement auf verschiedene geeignete Weisen herzustellen und einzusetzen, dabei kann es sowohl plastisch als auch ein elastisch deformierbares Teil realisiert sein.

## Patentansprüche

1. Ventilvorrichtung mit einem Ventilkörper (1, 1'), der mittels einer Sicherungseinheit (4, 4') lösbar an einem zum Aufnehmen von elektronischen Reifendruckmessmitteln ausgebildeten Gehäuse (3, 3') so verbunden ist, dass in einem verriegelten Zustand der Sicherungseinheit der Ventilkörper in einer Relativposition zum Gehäuse fixiert und in einem unverriegelten Zustand der Ventilkörper in seiner axialen Erstreckungsrichtung relativ zum Gehäuse bewegbar und von diesem lösbar ist,
wobei die Sicherungsmittel so an oder in dem Gehäuse vorgesehen sind, dass diese lateral und zum Herstellen des verriegelten Zustands an oder in einen mantelseitigen Verriegelungsabschnitt des Ventilkörpers an- bzw. eingreifen und so ausgebildet sind, dass in dem verriegelten Zustand die Sicherungsmittel am oder im Gehäuse gesichert oder verriegelt sind,
wobei die Sicherungsmittel zum Ausbilden einer Schnappverbindung mit dem Verriegelungsabschnitt im verriegelten Zustand ausgebildet sind und der Ventilkörper so geformt ist, dass er bei einem Einstecken in das Gehäuse die Sicherungsmittel auswärts biegt, wobei ein mantelseitig am Ventilkörper vorgesehener, zum Zusammenwirken mit einem Formelement als Sicherungsmittel bemessener abschnittsweise oder vollständig umlaufender Schlitz die Schnappverbindung herstellen kann,
**dadurch gekennzeichnet, dass** die Sicherungsmittel hebel- oder bügelartig ausgestaltet sind und einen Arm oder Schenkel ausbilden, der zum An- oder Eingreifen in bzw. an den Verriegelungsabschnitt vorgesehen ist,
die Sicherungsmittel einen gehäuseextern zugreifbaren Betätigungsabschnitt aufweisen, der zum Lösen des verriegelten Zustands insbesondere manuell und/oder mittels eines Werkzeugs betätigbar ist,
die einstückig ausgebildeten Sicherungsmittel (4') einen Federabschnitt (44) sowie zwei Schenkel in bevorzugter U- oder V-Querschnittsform aufweisen, von denen sich einer (40) am Gehäuse abstützt,
und der eine Schenkel in eine Nut oder eine Hinterschneidung des Gehäuses zur Befestigung der Sicherungsmittel am Gehäuse eingreift.

2. Vorrichtung nach Anspruch 1, **dadurch gekennzeichnet, dass** die Sicherungsmittel als am oder im Gehäuse schwenkbar, drehbar, federnd und/oder plastisch deformierbar gelagerte Baugruppe ausgebildet sind.

3. Vorrichtung nach einem der Ansprüche 1 oder 2, **dadurch gekennzeichnet, dass** die Sicherungsmittel einen zur Deformation ausgebildeten Bereich aufweisen, der als Reaktion auf einen das Herstellen des gelösten Zustands bewirkenden Zugriff eine plastische Deformation erfährt.

4. Vorrichtung nach einem der Ansprüche 1 bis 3, **dadurch gekennzeichnet, dass** die Sicherungsmittel als vom Gehäuse separates Element ausgebildet und so gelagert sind, dass das Element im verriegelten Zustand durch Wirkung des Ventilkörpers am oder im Gehäuse gehalten und/oder verriegelt ist.

5. Vorrichtung nach einem der Ansprüche 1 bis 4, **dadurch gekennzeichnet, dass** der Ventilkörper einstückig ausgebildet ist.

6. Vorrichtung nach einem der Ansprüche 1 bis 5, **dadurch gekennzeichnet, dass** der Ventilkörper eine einen Verdrehsicherung bewirkende und zum kraftschlüssigen Zusammenwirken mit einem Abschnitt des Gehäuses ausgebildeten Verdrehsicherungsbereich aufweist.

7. Vorrichtung nach einem der Ansprüche 1 bis 6, **dadurch gekennzeichnet, dass** die Ventilvorrichtung als Snap-In-Ventil ausgebildet ist.

8. Vorrichtung nach einem der Ansprüche 1 bis 7, **dadurch gekennzeichnet, dass** die metallischen Sicherungsmittel elektrisch und/oder hochfrequenzmäßig mit einer im Gehäuse vorgesehenen Sende- und/oder Empfangselektronik verbunden sind, insbesondere durch eine Gehäusezwischenwand geführt sind.

9. Vorrichtung nach Anspruch 8, **dadurch gekennzeichnet, dass** die einstückig und bevorzugt als Stanzteil ausgebildeten Sicherungsmittel (4') einen Kontaktabschnitt (46) aufweisen, der zum Zusammenwirken mit einer die Sende- bzw. Empfangselektronik tragenden Leiterplatte, insbesondere zum Verlöten mit dieser, ausgebildet ist.

## Claims

1. A valve device, comprising
a valve body (1, 1'),
which is releasably connected by means of a retaining unit (4, 4') to a housing (3, 3') designed for receiving electronic tire pressure measuring means in such a manner
that in a locked state of the retaining unit, the valve body is fixed in a relative position to the housing, and in an unlocked state, the valve body can be moved in its axial direction of extent relative to the housing and can be released therefrom,
wherein
the retaining means are provided on or in the housing in such a manner that they engage laterally and for establishing the locked state on or in a jacket-side locking section of the valve body, and are designed such that in the locked state, the retaining means are secured or locked on or in the housing,
wherein
the retaining means are designed for forming a snap-in connection with the locking section in the locked state
and the valve body is formed such that it bends the retaining means outwards when the valve body is inserted into the housing, wherein a jacket-side slot which is provided in certain sections or over the entire circumference on the valve body, and which is dimensioned as a retaining means for interacting with a form element, can establish the snap-in connection,
**characterized in that**
the retaining means are configured in a lever- or bracket-like manner and form an arm or leg that is provided for engaging on or engaging in the locking section,
the retaining means have an actuating section that is accessible in a housing-external manner and that can be actuated in particular manually and/or by means of a tool for releasing the locked state,
the retaining means (4') designed in one piece have one spring section (44) as well as two legs in a preferred U- or V-shaped cross-section, one leg (40) of which is supported on the housing,
and the one leg engages in a groove or an undercut of the housing for fastening the retaining means on the housing.

2. The device according to claim 1, **characterized in that** the retaining means are designed as an assembly which is mounted on or in the housing in a pivotable, rotatable, resilient and/or plastically deformable manner.

3. The device according to claim 1 or 2, **characterized in that** the retaining means have a region that is designed for deformation and that is subjected to plastic deformation as reaction to an access that results in establishing the released state.

4. The device according to any one of the claims 1 to 3, **characterized in that** the retaining means are designed as an element separate from the housing and are mounted such that in the locked state, the element is held and/or locked on or in the housing under the action of the valve body.

5. The device according to any one of the claims 1 to 4, **characterized in that** the valve body is designed in one piece.

6. The device according to any one of the claims 1 to 5, **characterized in that** the valve body has an anti-twist protection region that effects anti-twist protection and is designed for force-fit interaction with a section of the housing.

7. The device according to any one of the claims 1 to 6, **characterized in that** the valve device is designed as a snap-in valve.

8. The device according to any one of the claims 1 to 7, **characterized in that** the metallic retaining means are connected electrically and/or in a high-frequency manner to a transmitting and/or receiving electronics provided in the housing and are in particular led through an intermediate housing wall.

9. The device according to claim 8, **characterized in that** the retaining means (4') designed in one piece and preferably as a stamped part have a contact section (46) that is designed for interacting with a circuit board carrying the transmitting or receiving electronics, in particular for being soldered to said circuit board.

## Revendications

1. Dispositif de valve comprenant un corps de valve (1, 1'), qui est relié, au moyen d'une unité de fixation (4, 4'), de manière amovible à un boîtier (3, 3') réalisé pour recevoir des moyens électroniques de mesure de pression de pneumatique, de telle sorte que, dans un état verrouillé de l'unité de fixation, le corps de valve est fixé dans une position relative par rapport au boîtier et, dans un état non verrouillé, le corps de valve est déplaçable par rapport au boîtier dans sa direction d'étendue axiale et peut être détaché de celui-ci, les moyens de fixation étant prévus sur ou dans le boîtier, de telle sorte que ceux-ci s'appliquent sur ou viennent en prise dans une portion de verrouillage côté enveloppe du corps de valve, de manière latérale et pour réaliser l'état verrouillé, et étant réalisés de telle sorte qu'à l'état verrouillé, les moyens de fixation sont fixés ou verrouillés sur ou dans le boîtier,
dans lequel
les moyens de fixation sont réalisés pour former une liaison par encliquetage avec la portion de verrouillage à l'état verrouillé, et le corps de valve est formé de telle sorte que, lors d'une insertion dans le boîtier, il plie les moyens de fixation vers l'extérieur, une fente prévue côté enveloppe sur le corps de valve, en partie ou entièrement périphérique et dimensionnée pour coopérer avec un élément façonné faisant office de moyen de fixation pouvant réaliser la liaison par encliquetage,
**caractérisé en ce que**
les moyens de fixation sont configurés en forme de levier ou d'étrier et forment un bras ou des branches qui est prévu pour s'appliquer sur ou venir en prise dans la portion de verrouillage,
les moyens de fixation comprennent une portion d'actionnement accessible de façon extérieure au boîtier qui peut être actionnée en particulier manuellement et/ou au moyen d'un outil pour libérer l'état verrouillé,
les moyens de fixation (4') réalisés d'une seule pièce comprennent une section élastique (44) ainsi que deux branches de forme en section transversale de préférence en U ou en V, parmi lesquelles l'une (40) s'appuie sur le boîtier,
et que l'une des branches vient en prise dans une rainure ou une contredépouille du boîtier pour la fixation des moyens de fixation sur le boîtier.

2. Dispositif selon la revendication 1, **caractérisé en ce que** les moyens de fixation sont réalisés sous forme d'ensemble monté sur ou dans le boîtier de manière pivotante, rotative, élastique et/ou déformable plastiquement.

3. Dispositif selon l'une quelconque des revendications 1 ou 2, **caractérisé en ce que** les moyens de fixation comprennent une région réalisée pour être déformée, laquelle subit une déformation plastique en réponse à un accès provoquant la réalisation de l'état libéré.

4. Dispositif selon l'une quelconque des revendications 1 à 3, **caractérisé en ce que** les moyens de fixation sont réalisés sous forme d'élément séparé du boîtier et sont montés de telle sorte que l'élément soit, à l'état verrouillé, maintenu et/ou verrouillé sur ou dans le boîtier par l'action du corps de valve.

5. Dispositif selon l'une quelconque des revendications 1 à 4, **caractérisé en ce que** le corps de valve est réalisé d'une seule pièce.

6. Dispositif selon l'une quelconque des revendications 1 à 5, **caractérisé en ce que** le corps de valve comprend une région de fixation antirotation provoquant une fixation antirotation et réalisée pour coopérer par engagement par force avec une portion du boîtier.

7. Dispositif selon l'une quelconque des revendications 1 à 6, **caractérisé en ce que** le dispositif de valve est réalisé sous forme de valve Snap-in.

8. Dispositif selon l'une quelconque des revendications 1 à 7, **caractérisé en ce que** les moyens de fixation métalliques sont connectés électriquement et/ou par une connexion à haute fréquence à une électronique d'émission et/ou de réception prévue dans le boîtier, en particulier sont guidés à travers une paroi intermédiaire de boîtier.

9. Dispositif selon la revendication 8, **caractérisé en ce que** les moyens de fixation (4') réalisés d'une seule pièce et de préférence en tant que pièce découpée comprennent une portion de contact (46) qui est réalisée pour coopérer avec une carte imprimée portant l'électronique d'émission ou de réception, en particulier réalisée pour être brasée sur celle-ci.
